# FASCICULE DE BREVET EUROPEEN

(11) **EP 1 367 266 B1**
(45) Date de publication et mention de la délivrance du brevet: **28.09.2005**
(21) Numéro de dépôt: 03291269.3
(22) Date de dépôt: 27.05.2003
(51) Int. Cl.: F16B 13/06

(54) **Cheville à douille expansible avec une portion compressible**
Spreizdübel mit einer komprimierbaren Zone
Expansion dowel with a compressible portion

(30) Priorité: 30.05.2002 FR 0206647
(43) Date de publication de la demande: 03.12.2003
(73) Titulaire: SOCIETE DE PROSPECTION ET D'INVENTIONS TECHNIQUES SPIT, 26501 Bourg-Les-Valence Cédex (FR)
(72) Inventeur: Rouger, Claire, 26000 Valence (FR)
(74) Mandataire: Bloch, Gérard

(56) Documents cités:
- EP-A- 0 099 028
- DE-U- 7 625 795
- GB-A- 2 016 106

## Description

La présente demande concerne une cheville de fixation d'une pièce à un support, à douille expansible disposée autour d'une tige filetée engagée dans une entretoise et un noyau d'expansion de la douille, la douille comportant, entre l'entretoise et le noyau, une portion axialement compressible, ou collapsible.

On connaît de telles chevilles, notamment par les documents WO 96/25601, WO 92/04547 et DE 3023411.

Lorsqu'on veut fixer une pièce à un support, par exemple un support de maçonnerie, on peut utiliser de telles chevilles à douille expansible qu'on fixe dans des trous d'ancrage forés dans le support. Il peut arriver que la pièce à fixer soit, en un endroit, décollée du support. En utilisant une cheville à douille comprenant une portion compressible, on arrive souvent, lors de l'ancrage de la cheville, à plaquer la pièce contre le support grâce à la compression de la portion de douille compressible. Mais parfois, le raccourcissement axial de la portion de douille compressible n'est pas suffisant avant que la cheville ne soit parfaitement ancrée dans son trou d'ancrage, pour assurer le placage de la pièce.

Par ailleurs, il peut aussi arriver que, avec une telle cheville, lorsqu'on veut fixer une pièce, dont l'épaisseur est telle que le risque qu'elle soit décollée du support n'existe pas forcément et que, la tige filetée s'étendant verticalement, l'entretoise s'échappe par gravité du trou de passage de la cheville préalablement percé dans la pièce, l'entretoise ne s'oppose plus aux forces radiales qui tendent à déplacer la pièce à la surface du support et, finalement, ne la bloque plus en déplacement latéral. Il peut en être ainsi, par exemple, de semelles de tapis transporteur soumises à des vibrations.

L'invention de la présente demande vise à s'affranchir de tels risques.

A cet effet, la présente demande concerne une cheville à douille expansible du type défini ci-dessus, caractérisée par le fait que la portion de douille compressible comporte des moyens cisaillables agencés pour, après cisaillement, autoriser un raccourcissement axial de la douille et il est prévu des moyens de maintien axial de l'entretoise dans la cheville.

Ainsi, sous l'action de la force exercée axialement par le noyau sur la douille, lors de son expansion, le cisaillement de la douille et son raccourcissement de cisaillement, d'une part, et sa compression et son raccourcissement de compression, d'autre part, se complètent utilement pour assurer un raccourcissement axial global suffisant pour plaquer la pièce à fixer avant l'ancrage de la cheville.

Par ailleurs, selon l'invention l'entretoise étant maintenue axialement, c'est-à-dire empêchée de glisser le long de la tige filetée, elle ne peut que rester engagée dans le trou de fixation de la pièce pour assurer son blocage latéral.

De préférence, les moyens cisaillables sont agencés pour être cisaillés avant la compression des moyens compressibles.

Avantageusement, les moyens cisaillables comportent des ponts cisaillables reliant deux portions de douille agencées pour s'emboîter axialement l'une dans l'autre, chaque pont étant de préférence incliné sur un plan axial.

De préférence encore, les portions de douille d'emboîtement sont compressibles.

Dans la forme de réalisation préférée de la cheville de l'invention, les moyens de maintien axial de l'entretoise sont ménagés sur la partie de portion de douille compressible agencée pour rester adjacente à l'entretoise après cisaillement.

De préférence encore, les moyens de maintien axial comprennent des ergots d'accrochage.

Dans la forme de réalisation préférée de la cheville de l'invention, la douille est constituée d'un flan de tôle découpé et partiellement roulé sur lui-même.

L'invention sera mieux comprise à l'aide de la description suivante de la forme de réalisation préférée de la cheville de l'invention, en référence au dessin annexé, sur lequel :
- la figure 1 représente une vue du flan de tôle avant d'être roulé sur lui-même pour former la douille expansible de l'invention ;
- la figure 2 représente une vue en perspective de la douille expansible obtenue à partir du flan de la figure 1 ;
- la figure 3 représente une vue en perspective de la cheville de l'invention ;
- la figure 4 représente une vue en coupe axiale de la cheville en position dans un trou d'ancrage avant fixation d'une pièce ;
- la figure 5 représente une vue en coupe axiale de la cheville après expansion du noyau d'expansion ;
- le figure 6 représente une vue en coupe axiale de la cheville après fixation de la pièce ;
- la figure 7 représente une vue en bout de la douille expansible obtenue à partir du flan de la figure 1.

La cheville représentée sur le dessin comporte un ensemble fileté 1, d'axe 20, une douille expansible 2 et un noyau conique d'expansion 3. L'ensemble fileté 1 comporte une tige filetée, ou vis, 9 proprement dite et une entretoise tubulaire 8. La tige filetée 9 comporte une extrémité filetée 4 et une extrémité de tête 6, de type écrou. Une rondelle d'appui 7 est disposée entre la tête de vis 6 et l'entretoise 8.

L'entretoise 8 est d'un diamètre sensiblement égal à celui d'un trou d'ancrage dans lequel la cheville sera ancrée.

La douille expansible 2, de même diamètre extérieur que l'entretoise tubulaire 8, est disposée autour de la portion de tige 9 entre l'entretoise 8 et le noyau d'expansion 3, contre le bord annulaire 10 de l'entretoise 8 opposé à la tête de vis 6. Le noyau 3 est taraudé intérieurement et l'extrémité filetée 4 de la tige 9 y est engagée. La grande base 11 du noyau 3, tournée vers l'extrémité libre de la tige 1, a un diamètre sensiblement égal au diamètre extérieur de l'entretoise 8. La petite base 12 du noyau 3, tournée vers la tête 6 de la tige 1, a un diamètre légèrement plus petit que le diamètre intérieur de la douille expansible 2, pour y être engagée et provoquer l'expansion de la douille.

La douille expansible est constituée ici par un flan de tôle 13 découpé et roulé sur lui-même, à l'exception des parties situées entre les zones 40 et 50 des portions compressibles, ces parties restant planes, autour d'un axe qui sera naturellement confondu avec l'axe 20 de la cheville.

Le flan 13 comporte deux zones de découpes, la première 14, à partir d'un bord 15 qui servira de bord d'introduction du cône d'expansion 3, la seconde 16, près de l'autre bord 17 qui viendra en appui contre le bord annulaire 10 de l'entretoise 8.

Les découpes 18 de la première zone 14, qui deviendra la zone d'expansion de la douille, sont conformées pour dégager des jambes d'expansion 19. Les découpes 18 sont des ouvertures à bords longitudinaux, qui deviendront parallèles à l'axe 20, s'évasant légèrement en 22 près du bord 15 pour favoriser la pénétration ultérieure du noyau d'expansion 3 et elles se terminent, du côté opposé au bord 15, par des oeillets 21, ici légèrement oblongs, qui éviteront, lors de l'expansion, toute déchirure de la douille.

Les découpes 23 de la deuxième zone 16 sont ici conformées en double marche d'escalier pour que cette zone devienne une portion de douille axialement compressible avec en outre des ponts cisaillables 24 reliant deux portions 25, 26 de cette portion de douille pouvant, après cisaillement, s'emboîter axialement l'une dans l'autre.

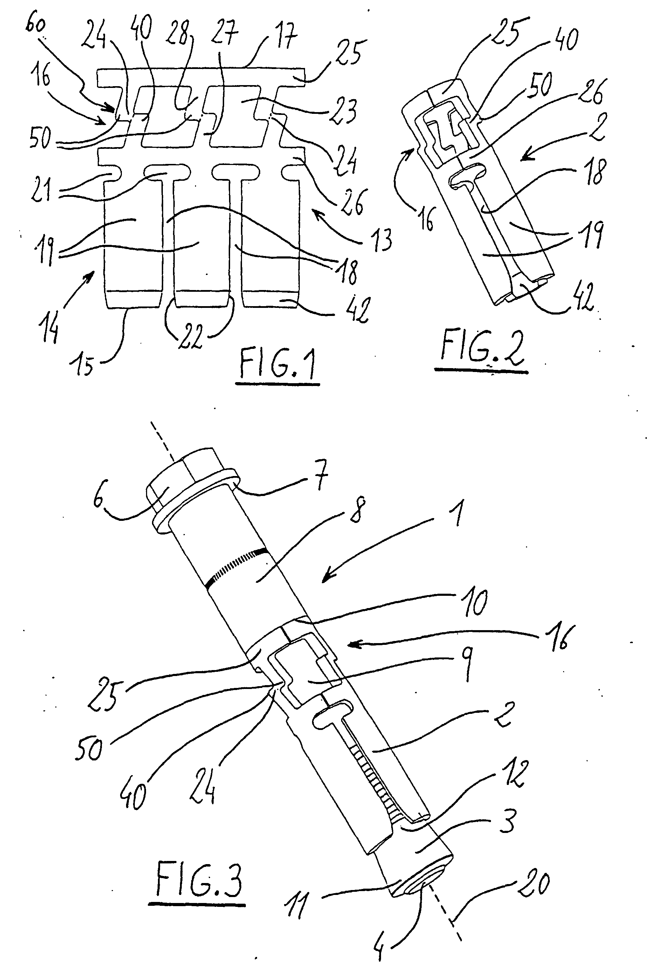

Plus précisément, chaque portion d'emboîtement comporte un peigne 25, 26 de dents compressibles 27, 28 à bords colinéaires au pont de rupture cisaillable 24 parallèles et inclinés sur un plan perpendiculaire aux bords 15, 17 et accolées deux à deux, tête-bêche, le long du pont de rupture cisaillable 24, de très faible largeur, représenté en pointillés sur la figure 1. Les dents compressibles 28 se trouvant du côté de l'entretoise comportent en outre, sur leur bord opposé au pont de rupture cisaillable 24, des coins qui deviendront, après roulage partiel du flan 13, des ergots d'accrochage 50 de maintien axial de la douille, ainsi ménagés sur la partie 25 de la portion 16 (25, 26) de douille compressible agencée pour rester adjacente à l'entretoise 8, après cisaillement. Les dents compressibles 27, ménagées sur la partie 26 de la portion 16 (25, 26) de douille compressible, comportent, sur leur bord opposé au pont de rupture cisaillable 24, des coins qui deviendront, après roulage partiel du flan 13,des ergots anti-rotation 40, qui se complèteront avec les ergots 50 pour assurer une fonction anti-rotation avant cisaillement.

Décrivons maintenant le roulage du flan de tôle 13 permettant d'obtenir la douille 2. Selon des techniques bien connues de l'homme du métier, un flan de tôle est en général roulé, pour former une douille, à l'aide d'une forme et d'une contre-forme ; la forme peut par exemple consister en une coquille en demi-cylindre, ou en un galet, et la contre-forme peut par exemple consister en un mandrin. Afin d'obtenir la douille expansible 2, le flan de tôle 13 est roulé entre une forme et une contre-forme, à l'exception des coins 40 et 50. Ainsi, en créant par exemple des évidements sur la forme, on ne roule pas les parties de portion de douille compressible correspondant à la zone de recouvrement des dents compressibles 27, 28, c'est-à-dire la bande 60 des parties des dents 27, 28 situées de part et d'autre des ponts de rupture 24, c'est-à-dire les coins 40, 50. Ces parties restent donc planes, ou quasiment planes, et forment ainsi des saillies planes tangentielles à la douille 2, et qui correspondent aux ergots 40, 50. Finalement, les dents compressibles 28, 27 des deux peignes 25, 26 comprennent, respectivement, des ergots d'accrochage et de maintien axial 50 et des ergots anti-rotation 40.

Après avoir roulé le flan, comme décrit précédemment, les dents 27, 28 sont donc inclinées sur un plan axial de la cheville, tandis que les ergots 40 et 50 forment des saillies planes tangentielles au cylindre formé par la douille. Les ergots 40 ainsi que les ergots 50 sont ainsi conformés pour, avant cisaillement, s'accrocher dans la paroi du trou d'accrochage 29 dont il sera question après, afin d'assurer une fonction anti-rotation de la douille. Après cisaillement, les ergots 50 d'accrochage et de maintien axial de la douille sont conformés pour s'accrocher dans la paroi du trou d'accrochage 29 de façon à maintenir la douille en position axiale, mais à ne pas résister aux forces de compression induites par le vissage de l'utilisateur. Sous l'action d'une force de compression qui, lors de l'expansion de la douille par le noyau, s'applique perpendiculairement aux bords 15, 17, il se produit un cisaillement des ponts 24 avant que les dents 27, 28 des deux peignes 25, 26 ne glissent les unes sur les autres et que les peignes 25, 26 ne s'emboîtent l'un dans l'autre pour raccourcir axialement la douille.

Après un emboîtement des peignes, leurs dents 27, 28 peuvent être comprimées pour entraîner, au-delà du raccourcissement de cisaillement, un autre raccourcissement de compression de la douille 2.

On notera que l'on a réduit intérieurement l'épaisseur du flan, progressivement depuis le bord 15 et sur une petite portion 42 pour, après avoir roulé le flan, obtenir une ouverture conique de la douille épousant le noyau conique 3.

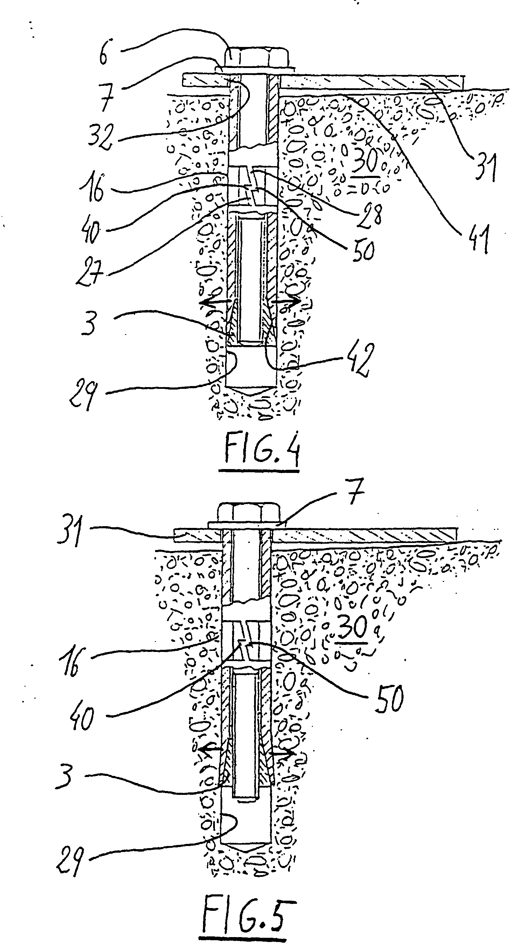

Ayant décrit les trois éléments de la cheville de l'invention, abordons maintenant son fonctionnement. Ces trois éléments étant associés dans leurs positions relatives de la figure 3, un trou d'ancrage 29 ayant été préalablement foré dans un matériau support 30, auquel doit être fixé une pièce 31, dans laquelle a aussi été percé un trou 32 de passage de la cheville, on passe la cheville à travers le trou 32 de la pièce et on l'introduit dans le trou d'ancrage 29 jusqu'à ce que la rondelle 7 vienne buter contre la pièce 31, qui n'est pas plaquée contre le support 30 (figure 4). On commence, par l'écrou 6, à visser dans le noyau 3 la tige 9, traversant l'entretoise 8 et la douille 2, immobilisée en rotation dans le trou 29 grâce aux ergots 40 et 50, ce qui commence à faire monter le noyau 3 dans la douille 2 et provoquer un début d'expansion de la douille, son ancrage et celui du noyau 3 (figure 5).

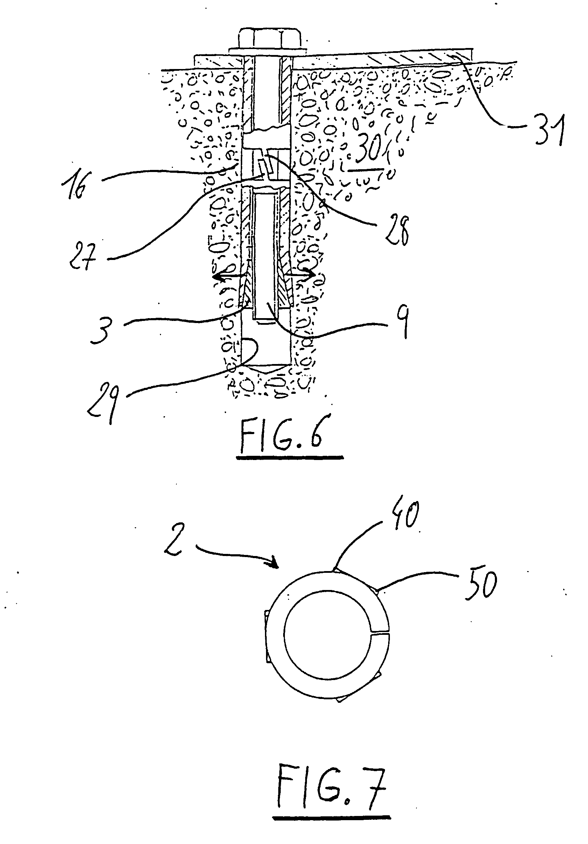

En poursuivant le vissage de la tige 9 dans le noyau 3, ancré dans le trou 29, on provoque le cisaillement des ponts 24 de la portion compressible 16 de la douille 2, le raccourcissement, de cisaillement, de la portion de douille 16, la descente de la tige 9, et donc de l'ensemble fileté 1, dans le trou d'ancrage 29 et, ainsi, le placage de la pièce 31 contre la surface libre 41 du matériau support 30 (figure 6). On remarquera que dans l'exemple illustré, la pièce 31 à fixer a été plaquée contre le matériau support 30 à la suite du raccourcissement de cisaillement de la douille. En cas de nécessité, la compression des dents 27, 28, sous la poursuite de l'action de vissage de la tige, aurait pu permettre un raccourcissement supplémentaire de la douille. Après placage de la rondelle 7 contre la pièce 31 et de la pièce 31 contre le matériau support 30, la poursuite du vissage de la tige 9 dans le noyau d'expansion 3 provoque, non plus la descente de la tige 9 dans le trou d'ancrage 29, mais la remontée du noyau 3 dans le trou 29, la poursuite de l'expansion de la douille 2 et, finalement, l'ancrage de la cheville et la fixation de la pièce 31 au support 30.

Si la pièce n'a pas besoin d'être plaquée, ou si son placage ne nécessite qu'une partie du raccourcissement de cisaillement, c'est-à-dire qu'à l'issue du placage, les peignes ne sont que partiellement emboîtés, les ergots 50 de maintien axial de la douille, la pièce étant plaquée, empêchent la portion de douille adjacente à l'entretoise, si l'ensemble fileté 1 s'étend verticalement, de tomber par gravité, ce qui pourrait laisser l'entretoise s'échapper du trou 32 de passage de la cheville. En effet les ergots d'accrochage 50 forment des saillies planes tangentielles au cylindre formé par la douille, et prennent donc appui sur l'intérieur du trou d'ancrage 29, empêchant la portion 25 de douille agencée pour rester adjacente à l'entretoise 8 de tomber par gravité, et empêchant par là même l'entretoise 8 de tomber par gravité. Ainsi l'entretoise 8 reste bien en contact avec le trou 32 percé dans la pièce, et la cheville s'oppose aux forces radiales exercées sur la pièce.

De la même façon que précédemment, la poursuite du vissage de la tige 9 provoque la remontée du noyau 3 et l'ancrage final de la douille.

## Revendications

1. Cheville de fixation d'une pièce à un support, à douille expansible (2) disposée autour d'une tige filetée (9) engagée dans une entretoise (8) et un noyau (3) d'expansion de la douille (2), la douille (2) comportant, entre l'entretoise (8) et le noyau (3), une portion axialement compressible (16), **caractérisée par le fait que** la portion de douille compressible (16) comporte des moyens cisaillables (24) agencés pour, après cisaillement, autoriser un raccourcissement axial de la douille (2), et il est prévu des moyens (50) de maintien axial de l'entretoise (8) dans la cheville.

2. Cheville selon la revendication 1, dans laquelle les moyens cisaillables (24) sont agencés pour être cisaillés avant la compression des moyens compressibles (16).

3. Cheville selon l'une des revendications 1 et 2, dans laquelle les moyens cisaillables comportent des ponts cisaillables (24) reliant deux portions de douille (25, 26) agencées pour s'emboîter axialement l'une dans l'autre.

4. Cheville selon la revendication 3, dans laquelle chaque pont cisaillable (24) est incliné sur un plan axial.

5. Cheville selon l'une des revendications 3 et 4, dans laquelle les portions de douille d'emboîtement (25, 26) sont compressibles.

6. Cheville selon l'une des revendications 3 à 5, dans laquelle chaque portion de douille d'emboîtement comporte un peigne (25 ; 26) de dents compressibles (27 ; 28) accolées deux à deux, tête-bêche, le long d'un pont cisaillable (24).

7. Cheville selon la revendication 6, dans laquelle les dents (27 ; 28) des peignes (25 ; 26) sont inclinées sur un plan axial de la cheville.

8. Cheville selon la revendication 1, dans laquelle les moyens (50) de maintien axial de l'entretoise (8) sont ménagés sur la partie (25) de portion de douille compressible (16) agencée pour rester adjacente à l'entretoise (8) après cisaillement.

9. Cheville selon l'une des revendications 1 à 8, dans laquelle les moyens de maintien axial de l'entretoise (8) comprennent des ergots d'accrochage (50).

10. Cheville selon les revendications 9 et 6, dans laquelle les ergots d'accrochage (50) sont situés sur les dents compressibles (28).

11. Cheville selon les revendications 9 et 6, dans laquelle les dents compressibles (28, 27) des deux peignes (25, 26) comprennent, respectivement, des ergots d'accrochage et de maintien axial (50) et des ergots anti-rotation (40).

12. Cheville selon l'une des revendications 1 à 11, dans laquelle la douille (2) est constituée d'un flan de tôle découpé (14, 18 ; 16, 23) et au moins partiellement roulé sur lui-même.

13. Cheville selon les revendications 12 et 3, dans laquelle on roule le flan de tôle découpé (14, 18 ; 16, 23) de part et d'autre d'une bande (60) contenant les ponts cisaillables (24).

14. Cheville selon l'une des revendications 1 à 13, dans laquelle les moyens de maintien (50) comprennent des saillies planes tangentes à la douille (2) dans la zone compressible (16) de la douille (2).

## Claims

1. Dowel for fastening a piece to a support, with an expansion sleeve (2) placed around a threaded rod (9) inserted in a strut (8) and a core (3) for expanding the sleeve (2), the sleeve (2) comprising, between the strut (8) and the core (3), a portion (16) axially compressible, **characterized in that** the compressible sleeve portion (16) includes shearable means (24) arranged for, after shearing, allowing an axial shortening of the sleeve (2) and means (50) are provided for axial holding of the strut (8) in the dowel.

2. Dowel according to claim 1, wherein the shearable means (24) are arranged to be shorn before compression of the compressible portion (16).

3. Dowel according to one of claims 1 and 2, wherein the shearable means includes shearable bridges (24) bridging two sleeve portions (25, 26) arranged for axial fitting one into the other.

4. Dowel according to claim 3, wherein each shearable bridge is inclined on an axial plane.

5. Dowel according to one of claims 3 and 4, wherein the fitting sleeve portions (25, 26) are compressible.

6. Dowel according to one of the claims 3 to 5, wherein each fitting sleeve portion includes a comb (25, 26) of compressible teeth (27, 28) end-to-end, head to-tail, along a shearable bridge (24).

7. Dowel according to claim 6, wherein the teeth (27, 28) on the combs (25, 26) are inclined on an axial plane of the dowel.

8. Dowel according to claim 1, wherein the strut (8) axial holding means (50) are provided on that part (25) of the compressible sleeve portion (16) arranged to remain adjacent to the strut (8) after shearing.

9. Dowel according to one of claims 1 to 8, wherein the strut (8) axial holding means include hooking pins (50).

10. Dowel according to claims 9 and 6, wherein the hooking pins (50) are placed on the compressible teeth (28).

11. Dowel according to claims 9 and 6, wherein the compressible teeth (28, 27) on the two combs (25; 26) include axial holding and hooking pins (50) anti-rotation pins (40), respectively.

12. Dowel according to one of claims 1 to 11, wherein the dowel (2) is composed of a cut sheet metal blank (14, 18 ; 16, 23) and at least partially rolled on itself.

13. Dowel according to claims 12 and 3, wherein the cut sheet metal blank (14, 18, 16, 23) is rolled on either side of a band (60) containing the shearable bridges (24).

14. Dowel according to one of claims 1 to 13 wherein the holding means (5) includes flat protrusions tangential to the dowel (2) in the compressible area (16) of the dowel (2).

## Patentansprüche

1. Dübel zur Befestigung eines Bauteils an einem Träger, mit aufspreizbarer Hülse (2), die um eine Gewindestange (9) herum angeordnet ist, welche in ein Abstandsstück (8) eingeführt ist, und einem Kern (3) zum Aufspreizen der Hülse (2), wobei die Hülse (2) zwischen dem Abstandsstück (8) und dem Kern (3) einen axial komprimierbaren Abschnitt (16) aufweist, **dadurch gekennzeichnet dass** der komprimierbare Hülsenabschnitt (16) abscherbare Mittel (24) aufweist, die ausgelegt sind, um nach dem Abscheren eine axiale Verkürzung der Hülse (2) zu erlauben, und dass Mittel (50) für den axialen Halt des Abstandsstücks (8) vorgesehen sind im Dübel.

2. Dübel nach Anspruch 1, bei dem die abscherbaren Mittel (24) ausgelegt sind, um vor dem Komprimieren der komprimierbaren Mittel (16) abgeschert zu werden.

3. Dübel nach einem der Ansprüche 1 und 2, bei dem die abscherbaren Mittel abscherbare Brücken (24) aufweisen, die zwei Hülsenabschnitte (25, 26) verbinden, welche ausgelegt sind, um sich axial ineinander zu schieben.

4. Dübel nach Anspruch 3, bei dem jede abscherbare Brücke (24) zu einer axialen Ebene geneigt ist.

5. Dübel nach einem der Ansprüche 3 und 4, bei dem die Einschubhülsenabschnitte (25, 26) komprimierbar sind.

6. Dübel nach einem der Ansprüche 3 bis 5, bei dem jeder Einschubhülsenabschnitt einen Kamm (25; 26) mit komprimierbaren Zinken (27; 28) aufweist, die paarweise Kopf bei Fuß entlang einer abscherbaren Brücke (24) aneinandergefügt sind.

7. Dübel nach Anspruch 6, bei dem die Zinken (27; 28) der Kämme (25; 26) zu einer axialen Ebene des Dübels geneigt sind.

8. Dübel nach Anspruch 1, bei dem die Mittel (50) für den axialen Halt des Abstandsstücks (8) auf dem Bereich (25) des komprimierbaren Hülsenabschnitts (16) angeordnet sind, der ausgelegt ist, um nach dem Abscheren dem Abstandsstück (8) benachbart zu bleiben.

9. Dübel nach einem der Ansprüche 1 bis 8, bei dem die Mittel für den axialen Halt des Abstandsstücks (8) Befestigungsnasen (50) aufweisen.

10. Dübel nach den Ansprüchen 9 und 6, bei dem die Befestigungsnasen (50) sich auf den komprimierbaren Zinken (28) befinden.

11. Dübel nach den Ansprüchen 9 und 6, bei dem die komprimierbaren Zinken (28, 27) der beiden Kämme (25, 26) Nasen zur Befestigung und für den axialen Halt (50), bzw. Antirotationsnasen (40) aufweisen.

12. Dübel nach einem der Ansprüche 1 bis 11, bei dem die Hülse (2) aus einem geschnittenen Blechstreifen (14, 18; 16, 23) besteht, der zumindest teilweise auf sich selbst aufgerollt ist.

13. Dübel nach den Ansprüchen 12 und 3, bei dem man den geschnittenen Blechstreifen (14, 18; 16, 23) zu beiden Seiten eines Bands (60) rollt, das die abscherbaren Brücken (24) aufweist.

14. Dübel nach einem der Ansprüche 1 bis 13, bei dem die Haltemittel (50) ebene Vorsprünge aufweisen, die die Hülse (2) in der komprimierbaren Zone (16) der Hülse (2) tangieren.
